Europäisches Patentamt

**European Patent Office**

Office européen des brevets

(11) Numéro de publication : **0 286 540 B1**

(12) **FASCICULE DE BREVET EUROPEEN**

(45) Date de publication du fascicule du brevet :
22.05.91 Bulletin 91/21

(51) Int. Cl.⁵ : **B60Q 1/04, F21M 7/00**

(21) Numéro de dépôt : **88400838.4**

(22) Date de dépôt : **07.04.88**

(54) Projecteur de véhicule automobile comportant une bonnette de fermeture muni de moyens de ventilation.

(30) Priorité : **09.04.87 FR 8705026**

(43) Date de publication de la demande :
**12.10.88 Bulletin 88/41**

(45) Mention de la délivrance du brevet :
**22.05.91 Bulletin 91/21**

(84) Etats contractants désignés :
**DE ES GB IT**

(56) Documents cités :
**DE-A- 2 416 162**
**FR-A- 2 308 862**

(56) Documents cités :
**FR-A- 2 436 334**
**FR-A- 2 487 950**
**GB-A- 2 069 120**
**GB-A- 2 089 957**

(73) Titulaire : **VALEO VISION**
**17, rue Henri Gautier**
**F-93012 Bobigny Cédex (FR)**

(72) Inventeur : **Perrin, Pierre**
**8, avenue de Québec**
**F-93150 Le Blancmesnil (FR)**

(74) Mandataire : **Martin, Jean-Jacques et al**
**Cabinet REGIMBEAU 26, Avenue Kléber**
**F-75116 Paris (FR)**

EP 0 286 540 B1

Jouve, 18, rue Saint-Denis, 75001 PARIS

## Description

La présente invention concerne d'une façon générale les projecteurs de véhicules automobiles, et en particulier un projecteur à boîtier étanche équipé de moyens de ventilation.

Les projecteurs de véhicules automobiles sont généralement abrités dans des boîtiers clos qui permettent d'éviter la pénétration d'eau ou de poussières vers les divers organes de ces projecteurs. On évite ainsi avantageusement les risques de corrosion du miroir réfléchissant par l'eau sur sa surface et les pertes d'intensité lumineuses et autres défauts de photométrie dûs à l'accumulation de poussières sur la lampe, le miroir et la surface interne de la glace de fermeture.

Cependant, dans une fabrication en grande série, il apparaît impossible de donner au boîtier, avec un coût raisonnable, une étanchéité parfaite vis-à-vis de l'environnement extérieur et, à long terme, notamment à cause des écarts de température et de pression entre l'intérieur et l'extérieur du projecteur, de l'air chargé d'humidité est toujours susceptible de pénétrer à l'intérieur de ce dernier. Ceci occasionne la formation de petites gouttelettes de condensation sur le miroir et sur la glace de fermeture. Ainsi, les caractéristiques du faisceau lumineux sont tout de même dégradées et le risque de corrosion de la surface réfléchissante du miroir n'est pas totalement supprimé.

On connaît déjà dans la technique antérieure des moyens de ventilation qui permettent d'établir un échange d'air permanent entre l'espace intérieur du projecteur et l'extérieur, tout en empêchant la pénétration dans le projecteur de matières étrangères solides ou liquides. On assure de cette manière l'équilibre entre les humidités relatives et les températures à l'intérieur et à l'extérieur du projecteur, et les phénomènes de condensation à l'intérieur du projecteur sont éliminés en un temps très court. On évite ainsi l'accumulation d'eau à l'intérieur du projecteur lors des cycles répétés d'échauffement et de refroidissement dûs par exemple à des allumages/extinctions successifs de la lampe.

En particulier, on connaît déjà un projecteur de véhicule automobile (voir FR-A-2308862), du type comprenant un boîtier et une glace de fermeture définissant un espace intérieur, une bonnette fermant le boîtier dans sa région postérieure, une lampe et un réflecteur situés dans l'espace intérieur, et des moyens de ventilation de l'espace intérieur sous la forme d'un canal annulaire ouvert sur l'espace intérieur du projecteur dans sa région supérieure et ouvert sur l'extérieur dans sa région inférieure, le canal étant défini conjointement par un rebord périphérique axial de ladite bonnette et par une partie adjacente de la région postérieure du boîtier, le canal étant ouvert sur l'extérieur par au moins une ouverture formée dans ledit rebord dans une direction circonférentielle.

Le canal assure ainsi la ventilation du projecteur, en évitant les phénomènes de condensation à l'intérieur de celui-ci, tout en empêchant la pénétration d'eau, de boue, de poussière, etc., la gravité empêchant ces matières de remonter le long du canal.

Cependant, dans toutes les réalisations connues, on a constaté un fonctionnement non satisfaisant des moyens de ventilation. Plus précisément, la ou les ouvertures qui mettent le canal en communication avec l'extérieur sont dans tous les cas directement exposées à l'environnement ambiant dans l'espace moteur du véhicule, et l'on sait que les véhicules modernes comportent de moins en moins de protections basses contre les projections d'eau vers cet espace. Il en résulte, lorsqu'un tel véhicule roule par exemple dans des conditions de forte pluie, la présence dans l'environnement du projecteur de conditions d'humidité et de mouvement de gouttes d'eau qui sont parfois plus défavorables qu'à l'extérieur. Les ouvertures sont donc susceptibles de s'obstruer soit, lorsqu'elles sont de grandes dimensions, par accumulation d'un mélange de boue ou d'eau dans le canal annulaire, soit encore, lorsqu'elles sont de dimensions plus réduites, par formation d'un film capillaire dû au ruissellement d'eau sur les parois du projecteur et de sa bonnette. Il en résulte en pratique l'absence au moins temporaire d'une ventilation satisfaisante, avec en conséquence un risque de condensation à l'intérieur du boîtier, néfaste tant sur le plan optique que sur celui de la durabilité du projecteur.

La présente invention vise à pallier ces inconvénients de la technique antérieure et à proposer un projecteur dont les moyens de ventilation soient d'une bonne efficacité en toutes conditions, et plus précisément un projecteur dont le canal et les ouvertures de ventilation soient bien protégés contre les projections directes obstruantes d'eau et de boue et contre la formation de films capillaires.

Selon l'invention, le projecteur est caractérisé en ce que l'ouverture est constituée par une fente débouchant dans la région médiane d'un évent tubulaire allongé qui comporte à ses extrémités opposées deux ouvertures de sections différentes, qui s'étend dans une direction générale essentiellement transversale et dont le fond est légèrement incliné par rapport à l'horizontale.

De façon préférée, l'évent transversal est tronconique, avec un demi-angle au sommet compris entre 2° et 6° et avec un axe incliné d'un angle compris entre 0° et 20° par rapport à l'horizontale.

On a constaté avec des moyens de ventilation ainsi conçus non seulement un effet d'anti-obstruction comme indiqué plus haut, mais également une ventilation plus efficace en ce sens que la condensation sur les diverses parois intérieures du projecteur est éliminée plus rapidement. Ce phénomène sera expliqué plus en détail dans la description.

En outre, il est avantageux que la surface de la section transversale du canal annulaire soit comprise entre 6 et 10 mm³. On a constaté en effet de façon surprenante qu'une diminution de cette section avait pour effet d'accélérer l'élimination de la condensation. Ceci peut s'expliquer de la façon suivante : lorsqu'on allume le projecteur, sa température s'élève et il se produit alors un échange d'air avec l'extérieur, qui tend à stabiliser cette température à une valeur qui dépend de la section du canal. En réduisant cette section, habituellement importante, dans la gamme de valeurs ci-dessus, la température d'équilibre est légèrement augmentée et l'élimination de la condensation est accélérée.

D'autres aspects et avantages de la présente invention apparaîtront mieux à la lecture de la description détaillée suivante d'une forme de réalisation préférée de celle-ci, donnée à titre d'exemple et faite en référence aux dessins annexés, sur lesquels :

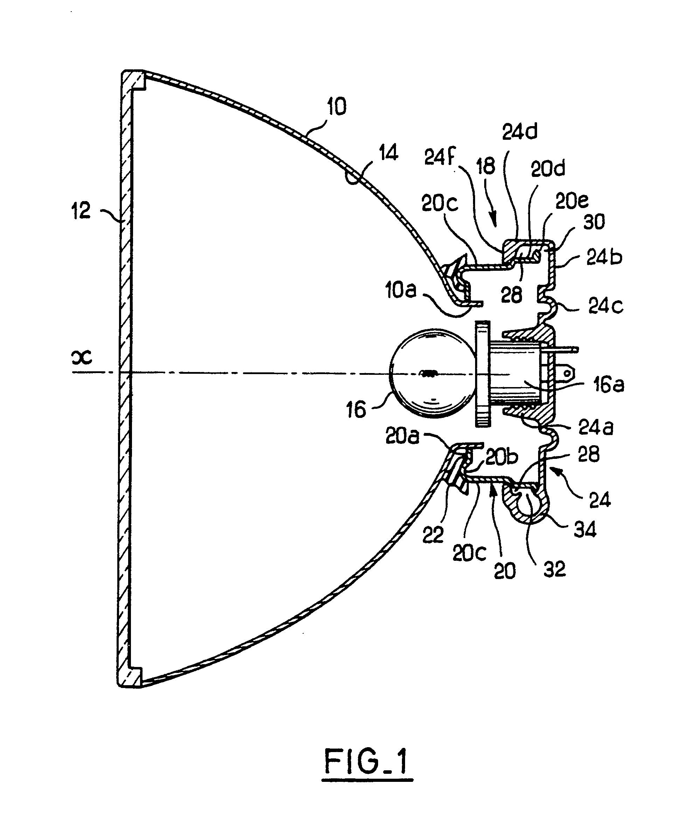

– la figure 1 est une vue en coupe verticale axiale schématique d'un projecteur équipé de moyens de ventilation conformes à l'invention.

– la figure 2 est une vue schématique de l'arrière d'une bonnette appartenant au projecteur de la figure 1,

– la figure 3 est une vue en coupe verticale axiale plus détaillée de la bonnette,

– la figure 4 est une vue partielle des moyens de ventilation, en coupe,

– la figure 5 est une vue en coupe transversale partielle d'une première réalisation de la bonnette, et

– la figure 6 est une vue en coupe transversale partielle d'une seconde forme de réalisation de la bonnette.

En référence aux dessins, un projecteur de véhicule automobile équipé de moyens de ventilation conformes à la présente invention comprend un boîtier extérieur 10 comportant à sa surface intérieure une surface 14 formant réflecteur, une glace frontale 12 fermant le boîtier de manière étanche à l'avant de celui-ci, une lampe à filament 16 coopérant avec le réflecteur 14 du boîtier et un ensemble à bonnette, globalement désigné par la référence 18, fermant le boîtier en venant s'appliquer sur la collerette 10a prévue à son extrémité arrière pour le passage de la lampe 16. L'ensemble 18 comprend une bague rigide 20, par exemple métallique, participant au maintien de la lampe 16 par l'intermédiaire de moyens d'accrochage appropriés (non représentés), un joint d'étanchéité 22 interposé entre la bague 20 et la surface extérieure du boîtier 10, et une bonnette 24 venant s'appliquer à l'arrière de la bague 20. Des moyens de fixation (non représentés) sont prévus entre la bague 20 et le boîtier 10, de manière que leur mise en oeuvre amène le joint 22 en compression pour établir une étanchéité appropriée.

Comme on peut l'observer, la bague 20 comporte une partie axiale 20a délimitant une ouverture centrale de la taille de la collerette 10a, un bossage annulaire axial 20b assurant le maintien du joint d'étanchéité 22 (ce dernier comportant à cet effet une rainure complémentaire), une première partie axiale cylindrique 20c, une seconde partie axiale cylindrique 20d, de diamètre légèrement supérieur à la première, et un bourrelet d'extrémité 20e en saillie radialement vers l'extérieur.

La bonnette 24, réalisée en une matière élastiquement déformable telle qu'un caoutchouc hydrophobe, comprend centralement un manchon borgne 24a pour la réception du culot 16a de la lampe 16 dont les broches 16b traversent des ouvertures appropriées, une partie circulaire radiale 24b présentant dans une zone intermédiaire un froncement annulaire 24c de section en "U" permettant d'absorber les éventuels écarts de positions en direction axiale entre la lampe 16 et la bague 20 solidaire du boîtier 10, un rebord périphérique 24d dirigé vers le boîtier 10, une nervure annulaire radiale 24e s'étendant vers l'intérieur à partir d'une région intermédiaire du rebord, et une partie annulaire formant collet 24f en saillie verticalement vers l'intérieur à partir du bord d'extrémité du rebord 24d sur une plus grande étendue que la nervure 24e. Une première gorge 24g est définie entre la nervure 24e et le fond de la bonnette et est apte à recevoir, lors du montage de ladite bonnette sur la bague 20, le bourrelet d'extrémité 20e de cette dernière, à des fins de verrouillage. De plus, lors de ce montage, les extrémités libres intérieures respectives de la nervure 24e et du collet rentrant 24f, qui définissent entre elles une seconde gorge, viennent respectivement s'appliquer élastiquement contre les surfaces cylindriques 20d et 20c de la bague 20 lorsque la bonnette est mise en place. De cette manière, est défini, en partie par la bonnette 24 et en partie par la bague 20, un canal annulaire 28 qui s'étend sur 360° à la périphérie de ladite bonnette. Comme on l'a brièvement indiqué plus haut, et comme on le verra en détail par la suite, il est avantageux que le canl 28 ait une surface de section transversale comprise entre environ 6 et 10 mm².

Un passage 30 est prévu dans la région supérieure de la bonnette 24 pour mettre en communication l'extrémité haute du canal annulaire 28 avec l'espace intérieur du projecteur. Cette ouverture présente la forme combinée d'une rupture localisée de la nervure 24e et d'un décrochement vers le haut et vers l'arrière, indiqué en 24h, de la paroi de la bonnette, qui définit un trajet de contournement du bourrelet d'extrémité postérieure 20e de la bague 20, entre ledit canal 28 et l'espace intérieur.

Conformément à la présente invention, le canal annulaire 28 est mis en communication avec l'extérieur par l'intermédiaire d'une ou de plusieurs fentes 32 formées dans une direction circonférentielle dans le rebord axial 24d de la bonnette 24 et débouchant dans la région supérieure médiane d'un évent transversal 34, de forme générale tubulaire, ouvert en 34a et 34b à ses deux extrémités, dont les sections transversales respectives sont différentes. De plus, afin d'éviter la stagnation de liquide dans l'évent, son fond 34c présente une légère inclinaison générale par rapport à l'horizontale.

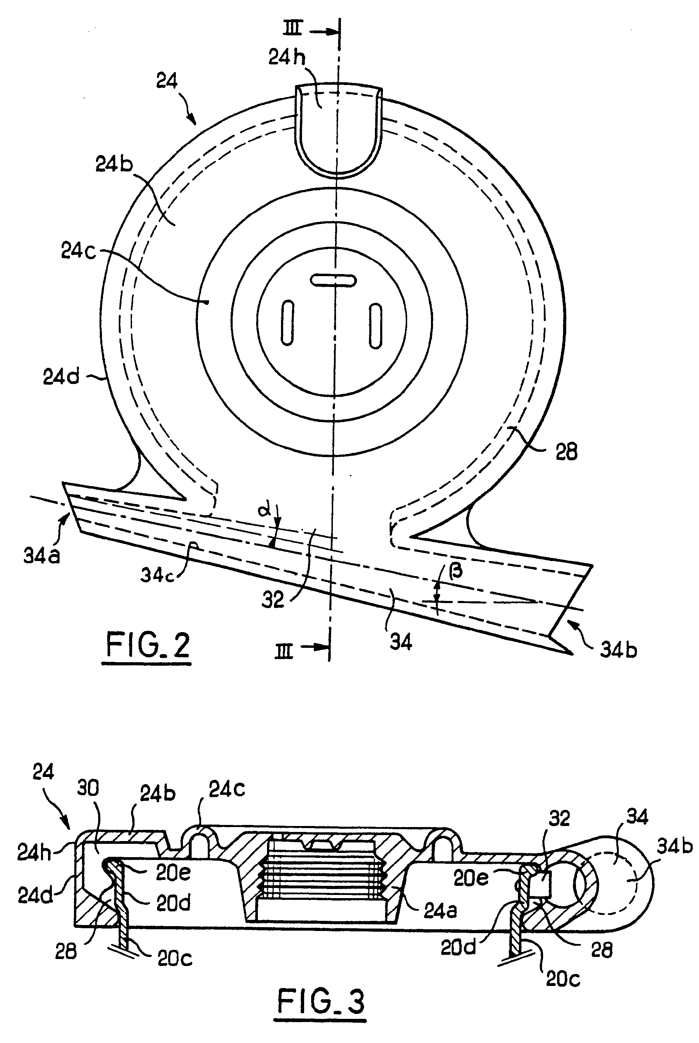

Dans la présente forme de réalisation, l'évent 34 présente la forme d'un tronc de cône réalisé d'un seul tenant avec la bonnette 24, comme le montrent en particulier les figures 2 et 3. L'axe A de l'évent est légèrement incliné vers le bas en direction de son ouverture la plus grande 34b, de telle sorte que, quelles que soient les valeurs choisies pour le demi-angle au sommet α du tronc de cône et l'angle β d'inclinaison de l'axe A par rapport à l'horizontale, le fond 34c de l'évent est toujours en pente. On évite ainsi que de l'eau ou de la boue stagnante ne s'accumule dans l'évent et ne risque d'entraver la ventilation.

Des essais conduits par la Demanderesse ont démontré que des résultats particulièrement satisfaisants étaient obtenus avec un demi-angle au sommet α de l'évent tronconique compris entre environ 2° et 6° et avec un angle β d'inclinaison de l'axe A par rapport à l'horizontale compris entre 0 et 20°. De la sorte la pente du fond 34c de l'évent est comprise entre 2° et 26°.

En outre, on pourra donner à l'évent une longueur comprise par exemple entre 50 et 100 mm et un diamètre moyen de l'ordre de 5 à 20 mm. En tout état de cause, on choisira ces dimensions de manière à ce que l'encombrement de la région inférieure de la bonnette, constituée par l'évent, soit compatibles avec l'environnement du projecteur sous le capot du véhicule.

On peut noter sur la figure 2 que les orifices d'extrémité 34a et 34b de l'évent 34 ne s'étendent pas dans des plans verticaux ou perpendiculaires à l'axe A, mais dans des plans substantiellement inclinés. Plus précisément, la région supérieure du bord de la petite ouverture 34a présente un angle aigu, de telle sorte que le ruissellement d'eau vers l'intérieur de l'évent tubulaire sera substantiellement empêché : les gouttes ou filets d'eau arrivant sur ladite région supérieure se détacheront spontanément en franchissant l'arête vive qui y est définie. D'une manière analogue, les gouttes d'eau qui auront pénétré dans l'évent par projection directe verront leur évacuation favorisée par l'arête vive formée dans la région inférieure du bord de la grande ouverture 34b. Enfin on peut noter dans un esprit analogue que ce genre d'arête vive défavorise de manière tout à fait satisfaisante la formation de films capillaires en travers des ouvertures.

Le comportement des moyens de ventilation tels que décrits ci-dessus va être expliqué en détail dans la suite. On envisagera successivement plusieurs cas de figure.

Tout d'abord, supposons que le projecteur est éteint depuis une durée suffisamment longue pour que les pressions et les températures soient identiques à l'intérieur et à l'extérieur de celui-ci ; lorsqu'il est rallumé, sa température intérieur s'élève jusqu'à une valeur qui est déterminée par l'apport thermique fourni par la lampe et par l'évacuation thermique permise par les moyens de ventilation. De façon surprenante, en choisissant une section du canal 28 nettement inférieure à la gamme de valeurs habituellement utilisée, et typiquement comprise entre 6 et 10 mm² on accroît légèrement la température d'équilibre dans le projecteur, et la disparition de la condensation s'en trouve favorisée.

En outre, supposons maintenant que le véhicule roule à vitesse relativement élevée. Il en résulte dans l'environnement du projecteur un vent relatif essentiellement dans le sens inverse de celui du déplacement du véhicule, auquel les ouvertures 34a et 34b sont exposées. Par effet de tirage, il en résulte dans la région de ces ouverture une chûte de pression. Du fait que l'évent n'est pas symétrique par rapport au plan longitudinal parallèle à la direction de l'écoulement, il en résulte que les dépressions ont des valeurs différentes aux deux extrémités de l'évent et par conséquent, une circulation d'air s'établit entre lesdites extrémités sous une pression légèrement inférieure à la pression atmosphérique. Ce courant d'air balaye la ou les fentes 32 de communication avec le canal 28, et il en résulte une ventilation plus efficace du projecteur. En outre, lorsque le courant d'air lié au déplacement du véhicule n'est pas rigoureusement perpendiculaire à la direction générale de l'évent, il est bien évident que l'on assiste encore à une circulation d'air favorisant la ventilation.

Par ailleurs, un troisième cas de figure à envisager est celui dans lequel le véhicule circule par temps de forte pluie. Il en résulte dans l'environnement du projecteur la présence d'une multitude de gouttelettes à grande vitesse, avec une répartition directionnelle que l'on considèrera ici comme aléatoire. Dans ces conditions, du fait que les ouvertures d'extrémité ont des dimensions sensiblement différentes, les courants de gouttelettes rentrantes dans ces dernières ont des importances différentes, ce qui atténue substantiellement leur déviation en direction de la ou des fentes 32 débouchant dans le canal 28. Ceci a son importance notamment en considérant que ces gouttelettes sont le plus souvent chargés de poussières, pour former un genre de boue, dont l'accumulation dans la région du canal 28 risque d'obstruer ce dernier.

Enfin, il faut mentionner le cas où l'espace moteur du véhicule est nettoyé par exemple à l'aide d'un jet sous forte pression. Grâce à la structure des moyens de ventilation de la présente invention, la ou les fentes 32 ne sont jamais directement exposées au jet et, même si l'une et l'autre des extrémités de l'évent sont directement exposées à ce dernier, aucun effet de canalisation n'est susceptible d'entraîner de l'eau, via le canal 28, jusque dans l'espace intérieur du projecteur.

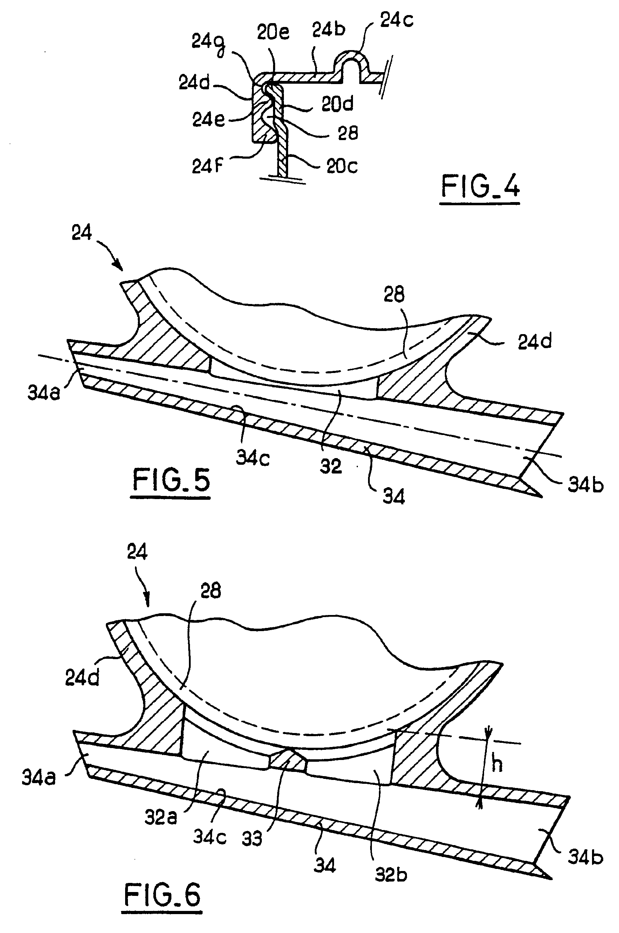

On a représenté sur les figures 5 et 6 deux formes de réalisation possible de la communication entre le canal 28 et l'évent 34. Sur la figure 5, une fente unique assure la communication sur une grande largeur. Sur la figure 6, on a prévu deux fentes 32a et 32b alignées circonférentiellement et qui sont de hauteur plus importante. De la sorte, les deux départs du canal annulaire 28, aux extrémités opposées des fentes sont reportés à une hauteur h bien au-dessus du passage tronconique de l'évent 34, et les risques de pénétration d'eau dans le canal, ou d'encrassement de celui-ci, sont encore réduits. On peut noter en outre qu'une partie en forme de dôme 33 sépare les deux fentes, afin d'éviter à cet endroit une accumulation d'eau.

Bien entendu, l'invention n'est pas limitée à la description qui précède, mais l'homme de l'art saura y apporter toute variante ou modification en restant dans le cadre des revendications qui suivent.

Notamment, pour chaque cas particulier, on donnera à l'évent une forme appropriée en fonction des considérations qui précèdent.

## Revendications

1. Projecteur de véhicule automobile, du type comprenant un boîtier (10) et une glace de fermeture (12) définissant un espace intérieur, une bonnette (24) fermant le boîtier dans sa région postérieure, une lampe (16) et un réflecteur (14) situés dans l'espace intérieur, et des moyens de ventilation de l'espace intérieur sous la forme d'un canal annulaire (28) ouvert sur l'espace intérieur du projecteur dans sa région supérieure et ouvert sur l'extérieur dans sa région inférieure, le canal (28) étant défini conjointement par un rebord périphérique axial de ladite bonnette et par une partie adjacente de la région postérieure du boîtier, le canal (28) étant ouvert sur l'extérieur par au moins une ouverture formée dans ledit rebord dans une direction circonférentielle, caractérisée en ce que l'ouverture est constituée par une fente débouchant dans la région médiane d'un évent tubulaire allongé (34) qui comporte à ses extrémités opposées deux ouvertures (34a, 34b) de sections différentes, qui s'étend dans une direction générale essentiellement transversale et dont le fond est légèrement incliné par rapport à l'horizontale.

2. Projecteur selon la revendication 1, caractérisé en ce que le canal annulaire (28) est défini par une gorge formée entre une nervure annulaire (24e) et un collet annulaire d'extrémité (24f) qui font saillie vers l'intérieur à partir du rebord périphérique (24d) de la bonnette et qui viennent en appui contre une bague intérieure rigide essentiellement cylindrique (20) solidaire de la région postérieure du boîtier.

3. Projecteur selon l'une des revendications 1 et 2, caractérisé en ce que l'évent (34) est de forme tronconique.

4. Projecteur selon la revendication 3, caractérisé en ce que l'évent présente un demi-angle au sommet (α) compris entre environ 2° et 6°.

5. Projecteur selon l'une des revendications 3 et 4, caractérisé en ce que l'axe de l'évent tronconique (34) est incliné d'un angle (β) compris entre environ 0 et 20° par rapport à l'horizontale.

6. Projecteur selon la revendication 5, caractérisé en ce que l'évent tronconique (34) est incliné vers le bas en direction de son extrémité la plus grande (34b).

7. Projecteur selon l'une des revendications 1 à 6, caractérisé en ce qu'au moins l'une des ouvertures d'extrémité de l'évent est délimitée par un bord formant un angle vif pour atténuer le ruissellement vers l'intérieur de l'évent ou favoriser le ruissellement à partir de l'évent.

8. Projecteur selon l'une des revendications 1 à 7, caractérisé en ce que le canal annulaire (28) a une surface de section transversale comprise entre environ 6 et 10 mm$^2$.

9. Projecteur selon l'une des revendications 1 à 8, caractérisé en ce que l'évent (34) est réalisé d'un seul tenant avec la bonnette (24).

10. Bonnette de fermeture arrière (24) pour un boîtier de projecteur de véhicule automobile, comportant un rebord périphérique axial (24d) susceptible de définir conjointement avec une partie homologue de la région postérieure du boîtier (10) un canal de ventilation ouvert sur l'espace intérieur du projecteur dans sa région supérieure et ouvert sur l'extérieur dans sa région inférieure, le canal (28) étant ouvert sur l'extérieur par au moins une ouverture formée dans ledit rebord dans une direction circonférentielle, caractérisée en ce que l'ouverture est constituée par une fente débouchant dans la région médiane d'un évent tubulaire allongé (34) qui comporte à ses extrémités opposées deux ouvertures (34a, 34b) de sections différentes, qui s'étend dans une direction générale essentiellement transversale et dont le fond est légèrement incliné par rapport à l'horizontale.

11. Bonnette selon la revendication 10, caractérisée en ce que l'évent (34) est de forme tronconique et présente un demi-angle au sommet (α) compris entre environ 2° et 6° et son axe (A) est incliné d'un angle (β) compris entre environ 0° et 20° par rapport à l'horizontale.

## Ansprüche

1. Kraftfahrzeugscheinwerfer, enthaltend ein Gehäuse (10) und eine Verschlußscheibe (12) zur Begrenzung eines Innenraums, eine Kappe (24) zum Verschließen des Gehäuses im hinteren Teil, eine Lampe (16) und einen Reflektor (14), die im Innenraum angeordnet sind, sowie Mittel zur Belüftung des Innenraums in Form eines Ringkanals (28), der im oberen Teil zum Innenraum hin und im unteren Teil nach außen hin offen ist, wobei der Kanal (28) gemeinsam durch einen axialen Umfangsrand der genannten Kappe und durch einen angrenzenden Teil des hinteren Gehäusebereichs begrenzt wird, während der Kanal (28) durch wenigstens eine Öffnung, die im genannten Rand in Umfangsrichtung ausgebildet ist, nach außen hin offen ist, **dadurch gekennzeichnet**, daß die Öffnung aus einem Schlitz besteht, der in den mittleren Bereich eines rohrförmigen Langlochs (34) einmündet, das an den beiden einander gegenüberliegenden Enden zwei Öffnungen (34a, 34b) mit unterschiedlichen Querschnitten aufweist, das sich in einer im wesentlichen quer verlaufenden allgemeinen Richtung erstreckt und dessen Boden im Verhältnis zur Horizontalen leicht geneigt ist.

2. Scheinwerfer nach Anspruch 1, **dadurch gekennzeichnet**, daß der Ringkanal (28) durch eine Rille begrenzt wird, die zwischen einer ringförmigen Rippe (24e) und einem ringförmigen Abschlußbund (24f) ausgebildet ist, die ausgehend vom Umfangsrand (24e) der Kappe nach innen vorspringen und auf einem starren, im wesentlichen zylindrischen (20) und fest mit dem hinteren Bereich des Gehäuses verbundenen Innenring aufliegen.

3. Scheinwerfer nach einem der Ansprüche 1 und 2, **dadurch gekennzeichnet**, daß das Loch (34) kegelstumpfförmig ist.

4. Scheinwerfer nach Anspruch 3, **dadurch gekennzeichnet**, daß das Loch am Scheitelpunkt (α) einen Halbwinkel zwischen 2° und 6° aufweist.

5. Scheinwerfer nach einem der Ansprüche 3 und 4, **dadurch gekennzeichnet**, daß die Achse des kegelstumpfförmigen Lochs (34) im Verhältnis zur Horizontalen in einem Winkel (β) zwischen etwa 0 und 20° geneigt ist.

6. Scheinwerfer nach Anspruch 5, **dadurch gekennzeichnet**, daß das kegelstumpfförmige Loch (34) in Richtung des größeren Endes (34b) nach unten geneigt ist.

7. Scheinwerfer nach einem der Ansprüche 1 bis 6, **dadurch gekennzeichnet**, daß wenigstens eine der Abschlußöffnungen des Lochs durch eine Kante begrenzt wird, die einen spitzen Winkel bildet, um das Herabrinnen in das Innere des Lochs zu dämpfen oder das Herabrinnen aus dem Loch zu begünstigen.

8. Scheinwerfer nach einem der Ansprüche 1 bis 7, **dadurch gekennzeichnet**, daß der Ringkanal (28) eine Fläche mit einem Querschnitt aufweist, der zwischen etwa 6 und 10 mm² beträgt.

9. Scheinwerfer nach einem der Ansprüche 1 bis 8, **dadurch gekennzeichnet**, daß das Loch (34) aus einem Stück mit der Kappe (24) besteht.

10. Hintere Verschlußkappe (24) für ein Kraftfahrzeug-Scheinwerfergehäuse, enthaltend einen axialen Umfangsrand (24d), der geeignet ist, zusammen mit einem entsprechenden Teil des hinteren Bereichs des Gehäuses (10) einen Belüftungskanal zu bilden, der im oberen Bereich zum Innenraum des Scheinwerfers hin und im unteren Bereich nach außen hin offen ist, wobei der Kanal (28) durch wenigstens eine Öffnung, die im genannten Rand in einer Umfangsrichtung ausgebildet ist, nach außen offen ist, **dadurch gekennzeichnet**, daß die Öffnung aus einem Schlitz besteht, der im mittleren Bereich eines rohrförmigen Langlochs (34) einmündet, welches an den gegenüberliegenden Enden zwei Öffnungen (34a, 34b) mit unterschiedlichem Querschnitt aufweist, sich in einer allgemeinen, im wesentlichen quer verlaufenden Richtung erstreckt und dessen Boden im Verhältnis zur Horizontalen leicht geneigt ist.

11. Kappe nach Anspruch 10, **dadurch gekennzeichnet**, daß das Loch (34) kegelstumpfförmig ist und am Scheitelpunkt (α) einen Halbwinkel zwischen etwa 2° und 6° aufweist und dessen Achse (A) im Verhältnis zur Horizontalen um einen Winkel (β) zwischen etwa 0° und 20° geneigt ist.

**Claims**

1. A headlamp for an automotive vehicle, of the kind comprising a housing (10) and a closure lens (12) defining an interior space, a bonnet (24) closing the housing in its posterior region, a lamp (16) and a reflector (14) situated in the interior space, and means for ventilating the interior space, these ventilating means being in the form of an annular channel (28) which is open to the interior space of the headlamp in its upper region and open to the outside in its lower region, the channel (28) being defined jointly by an axial, peripheral flange of the said bonnet and by an adjacent portion of the posterior region of the housing, the channel (28) being open to the outside through at least one aperture formed in the said flange in a circumferential direction, characterised in that the aperture comprises a slot which is open into the middle region of an elongated tubular vent element (34) that includes at its opposed ends two openings (34a, 34b) which have different cross sections and which extend in a generally substantially transverse direction, the base of the vent element being slightly inclined to the horizontal.

2. A headlamp according to Claim 1, characterised in that the annular channel (28) is defined by a groove formed between an annular rib (24e) and a terminal, annular collar (24f), with the rib and collar projecting inwardly from the peripheral flange (24d) of the bonnet and bearing against a substantially cylindrical, rigid, internal ring (20) which is fixed with respect to the posterior region of the housing.

3. A headlamp according to one of Claims 1 and 2, characterised in that the vent element (34) is frustoconical in shape.

4. A headlamp according to Claim 3, characterised in that the vent element defines at the apex of its cone a half angle ($\alpha$) of between about 2 degrees and 6 degrees.

5. A headlamp according to one of Claims 3 and 4, characterised in that the axis of the frustoconical vent element (34) is inclined at an angle ($\beta$) of between about zero and 20 degrees with respect to the horizontal.

6. A headlamp according to Claim 5, characterised in that the frustoconical vent element (34) is inclined downwardly towards its larger end (34b).

7. A headlamp according to one of Claims 1 to 6, characterised in that at least one of the terminal apertures of the vent element is delimited by an edge defining a sharp angle whereby to attenuate trickling towards the interior of the vent element or to encourage trickling out of the vent element.

8. A headlamp according to one of Claims 1 to 7, characterised in that the annular channel (28) has a surface having a transverse cross sectional area lying between about 6 and 10 mm$^2$.

9. A headlamp according to one of Claims 1 to 8, characterised in that the vent element (34) is formed integrally with the bonnet (24).

10. A rear closure bonnet (24) for a housing of a headlamp for an automotive vehicle, including an axial, peripheral flange (24d) adapted to define, jointly with an homologous part of the posterior region of the housing (10), a ventilation channel which is open into the interior space of the headlamp in its upper region and open to the outside in its lower region, the channel (28) being open to the outside through at least one aperture formed in the said flange in a circumferential direction, characterised in that the aperture comprises a slot which is open into the middle region of an elongated tubular vent element (34) that includes at its opposed ends two openings (34a, 34b) which have different cross sections and which extend in a generally substantially transverse direction, the base of the vent element being slightly inclined to the horizontal.

11. A bonnet according to Claim 10, characterised in that the vent element (34) is frustoconical in shape and defines at the apex of its cone a half angle ($\alpha$) of between about 2 degrees and 6 degrees, while its axis (A) is inclined at an angle ($\beta$) of between about zero and 20 degrees with respect to the horizontal.

FIG_1

FIG. 2

FIG. 3

FIG_4

FIG.5

FIG.6